(19)

Europäisches Patentamt

European Patent Office

Office européen des brevets

(11) **EP 4 764 645 A1**

(12) **EUROPEAN PATENT APPLICATION**

(43) Date of publication:
**24.06.2026 Bulletin 2026/26**

(21) Application number: **25216358.9**

(22) Date of filing: **17.11.2025**

(51) International Patent Classification (IPC):
**G02B 9/64** (2006.01)       **G02B 13/04** (2006.01)
**G02B 15/14** (2006.01)       **G02B 13/16** (2006.01)

(52) Cooperative Patent Classification (CPC):
**G02B 13/16; G02B 9/64; G02B 13/04; G02B 15/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.12.2024 CN 202411870077**

(71) Applicant: **XGIMI Technology Co., Ltd.**
**Chengdu, Sichuan 610000 (CN)**

(72) Inventors:
• **ZHANG, Jicheng**
**Chengdu, 610000 (CN)**

• **LI, Mingliang**
**Chengdu, 610000 (CN)**
• **CHENG, Xiao**
**Chengdu, 610000 (CN)**
• **GE, Rui**
**Chengdu, 610000 (CN)**
• **LI, Zhiwu**
**Chengdu, 610000 (CN)**
• **ZHENG, Yutai**
**Chengdu, 610000 (CN)**

(74) Representative: **Slingsby Partners LLP**
**1 Kingsway**
**London WC2B 6AN (GB)**

(54) **PROJECTION LENS, PROJECTION SYSTEM, AND PROJECTION DEVICE**

(57)     The present application discloses a projection lens, a projection system, and a projection device. The projection lens comprises a first lens group (G1), a second lens groups (G2), and an aperture (S). The first lens group (G1) includes first to fifth lenses (L1, L2, L3, L4, L5) respectively having a negative optical power, a positive optical power, a negative optical power, a negative optical power, and a positive optical power. The second lens group (G2) includes sixth to tenth lenses (L6, L7, L8, L9, L10) respectively having a positive optical power, a negative optical power, a positive optical power, a positive optical power, and a positive optical power. The projection lens satisfies at least one of the following conditions: 1.6 ≤ BFL/EFL ≤ 2.5, or BFL/TTL ≥ 0.3. The projection lens provided in the present application can achieve a more compact size while enhancing its performance.

**Fig. 1**

EP 4 764 645 A1

**Description**

**TECHNICAL FIELD**

The present application relates to the technical field of projection imaging, and in particular to a projection lens, a projection system, and a projection device.

**BACKGROUND**

As projectors are more and more widely used in various fields, the projection lens determines the imaging quality of the projector, and the design of projection lens is constantly improving and optimizing. At present, it is required that the projector is more miniaturized and the projection lens has a more compact structural design and a smaller size. Therefore, it brings certain challenges to the performance of the projection lens, and the performance of the existing projection lens needs to be improved.

**SUMMARY**

Some embodiments of the present application provide a projection lens, a projection system, and a projection device which can improve performance of the projection lens.

In a first aspect, some embodiments of the present application provide a projection lens. The projection lens includes a first lens group having a negative optical power, an aperture, and a second lens group having a positive optical power that are disposed in sequence along an optical axis from a higher-magnification side to a lower-magnification side. The first lens group includes a first lens, a second lens, a third lens, a fourth lens, and a fifth lens that are disposed in sequence along the optical axis from the higher-magnification side to the lower-magnification side, the first lens having a negative optical power, the second lens having a positive optical power, the third lens having a negative optical power, the fourth lens having a negative optical power, and the fifth lens having a positive optical power. The second lens group includes a sixth lens, a seventh lens, an eighth lens, a ninth lens, and a tenth lens that are disposed in sequence along the optical axis from the higher-magnification side to the lower-magnification side, the sixth lens having a positive optical power, the seventh lens having a negative optical power, the eighth lens having a positive optical power, the ninth lens having a positive optical power, and the tenth lens having a positive optical power. A focal length EFL of the projection lens, a back focal length BFL of the projection lens, and a total track length TTL of the projection lens satisfy at least one of following conditions: $1.6 \leq BFL/EFL \leq 2.5$,

According to some embodiments in the first aspect of the present application, the first lens group includes an eleventh lens disposed between the second lens and the third lens and having a negative optical power, and/or the second lens group includes a twelfth lens disposed between the aperture and the eighth lens having a negative optical power.

According to any one of the preceding embodiments in the first aspect of the present application, the fourth lens and the fifth lens form a doublet lens group having a positive optical power, and/or the sixth lens, the seventh lens, and the eighth lens form a triplet lens group having a positive optical power.

According to any one of the preceding embodiments in the first aspect of the present application, a refractive index of the fourth lens is smaller than a refractive index of the fifth lens, and/or a refractive index of the sixth lens and a refractive index of the eighth lens each are smaller than a refractive index of the seventh lens.

According to any one of the preceding embodiments in the first aspect of the present application, the fourth lens is a biconcave negative lens, and the fifth lens is a biconvex positive lens; and/or the sixth lens is a biconvex positive lens, the seventh lens is a biconcave negative lens, and the eighth lens is a biconvex positive lens.

According to any one of the preceding embodiments in the first aspect of the present application, an image plane height H of the projection lens, an F-number Fno of the projection lens, and an outer diameter $L_{MAX}$ of a largest lens of the projection lens satisfy at least one of following conditions: $8 \leq TTL/H \leq 22$, or $10 \text{ mm} \leq L_{MAX}/Fno \leq 25 \text{ mm}$.

According to any one of the preceding embodiments in the first aspect of the present application, a focal length $EFL_{ZOOM1}$ of the first lens group and a focal length $EFL_{ZOOM2}$ of the second lens group satisfy following conditions: $-65.0 < EFL_{ZOOM1}/EFL < -30.0$, and $0.5 < EFL_{ZOOM2}/EFL < 2.5$.

According to any one of the preceding embodiments in the first aspect of the present application, the projection lens satisfies at least one of the following conditions: $8 \text{ mm} \leq EFL \leq 25 \text{ mm}$; $TTL \leq 180 \text{ mm}$; $BFL \geq 20 \text{ mm}$; $Fno \leq 2.8$, where Fno denotes an F-number of the projection lens; or a diameter of each of the lenses being not greater than 50 mm.

According to any one of the preceding embodiments in the first aspect of the present application, all of the lenses of the projection lens are all-glass spherical lenses.

According to any one of the preceding embodiments in the first aspect of the present application, at least two of the lenses of the second lens group each have a refractive index coefficient of refractive index to focal length that is negative, X satisfying: $1 \leq X \leq 4$.

In a second aspect, the present application provides a projection system which includes the projection lens according to any one of the embodiments in the first aspect.

In a third aspect, the present application provides a projection device which includes the projection lens according to any one of the embodiments in the first aspect or the projection system provided in the second aspect.

In the projection lens provided in the present application, the projection lens includes the first lens group, the aperture, and the second lens group. The positive optical power or the negative optical power of each lens in the first lens group and the second lens group are reasonably set, so that the projection lens can have a precise structure to achieve the purposes of low cost, compact, and small size. The first lens group G1 plays a role of collecting light rays and correcting distortion and other off-axis aberrations. The second lens group G2 plays a role of controlling an image-side telecentric angle and correcting chromatic aberration and other off-axis aberrations. The first lens group G1 plays a role of distortion correction and contributes to improving a field of view of the system. The first lens group G1 may effectively correct off-axis aberrations such as distortion, coma, field curvature, and astigmatism, and ensure that an incident angle of light incident on the lens surface is relatively gentle to obtain a large field of view without introducing significant higher-order aberrations. By reasonably setting the optical power of each lens, it may ensure the smooth transition of light and the stability of imaging. By defining the ratio of BFL to EFL of the projection lens to be within [1.6, 2.5], the projection lens may have a relatively large back focal length, which may provide favorable conditions for brightness, structure, and heat dissipation, and improve the performance of the projection lens. By defining the ratio of BFL to TTL of the projection lens to be greater than or equal to 0.3, the projection lens may have a relatively large back focus length, and moreover, the characteristic of small lens length may be satisfied. Thus, the projection device using the projection lens may be miniaturized, thereby improving the performance of the projection lens. In a word, the performance of the projection lens is improved in the present application.

## BRIEF DESCRIPTION OF THE DRAWINGS

Other features, objects, and advantages of the present application will become more apparent from reading the following detailed description of non-limiting embodiments with reference to the drawings, in which same or similar reference numerals indicate same or similar features.

Fig. 1 is a schematic diagram of a projection lens according to some embodiments in a first aspect of the present application;

Fig. 2 is another schematic diagram of a projection lens according to some embodiments in a first aspect of the present application;

Fig. 3 is another schematic diagram of a projection lens according to some embodiments in a first aspect of the present application; and

Fig. 4 is another schematic diagram of a projection lens according to some embodiments in a first aspect of the present application.

Reference Numerals:

G1, First lens group; S, Aperture; G2, Second lens group; P, Prism; CG, Protective glass; DMD, Digital micromirror device; SCN, Screen;

L1, First lens; L2, Second lens; L3, Third lens; L4, Fourth lens; L5, Fifth lens; L6, Sixth lens; L7, Seventh lens; L8, Eighth lens; L9, Ninth lens; L10, Tenth lens; L11, Eleventh lens; and L12, Twelfth lens.

## DETAILED DESCRIPTION

Features of various aspects and exemplary embodiments of the present application will be described in detail below. In the following detailed description, numerous specific details are presented to provide a thorough understanding of the present application. However, it will be apparent for those skilled in the art that, the present application may be implemented without some of these specific details. The following description of the embodiments is merely to provide a better understanding of the present application by illustrating examples. In the drawings and the following description, at least some of the well-known structures and techniques are not shown in order to avoid unnecessary ambiguity of the present application. In addition, the dimensions of some structures may be enlarged for clarity. Furthermore, the features, structures, or characteristics described below may be combined in one or more embodiments in any suitable manner.

In the description of the present application, it should be noted that, "a plurality" means two or more, unless otherwise specified. The orientations or positional relationships indicated by the terms "upper," "lower," "left," "right," "inner," "outer" among others are merely for the purpose of facilitating and simplifying the description of the present application, and do not indicate or imply that the referred device or element must have a specific orientation, be constructed, and operate in a specific orientation, and are therefore not to be construed as limiting the present application. Furthermore, the terms "first," "second," among others are for descriptive purposes only and are not to be understood as indicating or implying relative importance. Moreover, the terms "include", "comprise", or any other variation thereof, are intended to cover a non-exclusive inclusion, such that a(n) process, method, article or device that includes a series of elements not only includes those elements but also includes other elements not explicitly listed or also includes elements inherent to such process, method, article or device. An element preceded by "include..." does not, without more constraints, preclude the existence of additional identical elements in the process, method, article or device that includes the element.

The orientation words appearing in the following description are the directions shown in the drawings, and do not limit the specific structure of the embodiments of the present application. In the description of the present application, it should also be noted that, unless otherwise explicitly specified and limited, the terms "installation" and "connection" should be understood in a broad sense. For example, it can be a fixed connection, a detachable connection, or integrally connection; and it can be a direct connection or an indirect connection. For those skilled in the art, the specific meanings of the above terms in the present application may be understood according to specific situations.

As projectors are more and more widely used in various fields, the projection lens determines the imaging quality of the projector, and the design of projection lens is constantly improving and optimizing. At present, it is required that the projector is more miniaturized and the projection lens has a more compact structural design and a smaller size. Therefore, it brings certain challenges to the performance of the projection lens, that is, achieving a small size while ensuring the performance of the projection lens and reducing the cost thereof.

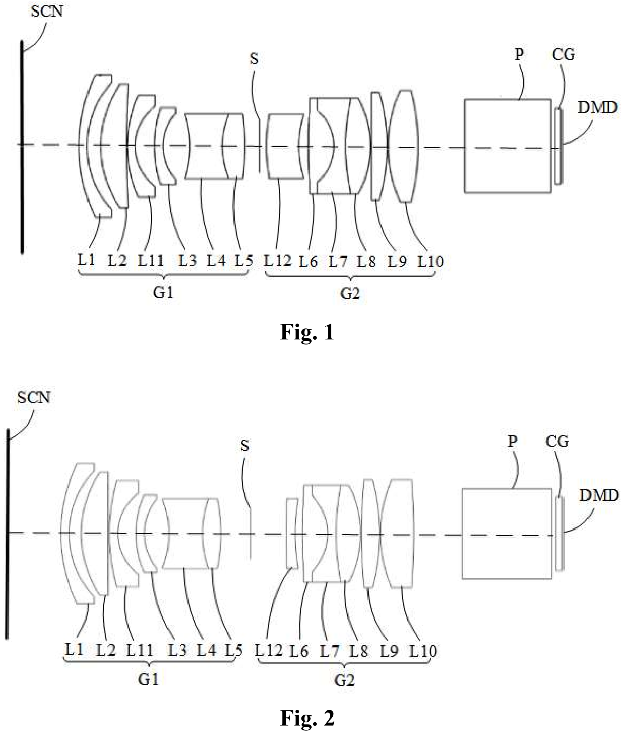

The present application is proposed to solve the above technical problems. In order to better understand the present application, a projection lens, a projection system, and a projection device of the embodiments of the present application will be described in detail below with reference to Figs. 1 to 4.

The projection lens of the embodiments of the present application can be a projection lens of a projector. Optionally, the projection lens can be a projection lens of a laser projector. The laser projector has the characteristics of high image contrast, clear imaging, bright colors, and higher brightness. Optionally, the projection lens according to the embodiments of the present application can be applied to a light emitting diode (LED) projector, a liquid crystal display (LCD) projector, or the like. The projection lens of the embodiments of the present application is, but is not limited to be a projection lens in the projector, and if the projection lens provided in the present application is applied to other devices, it should also fall within the protection scope of the present application.

The projection lens of the embodiments of the present application can be applied to a fixed-focus projection lens of a projector, and the fixed-focus projection lens includes a prism P, a protective glass CG, and a digital micromirror device (DMD) chip. A first lens group G1, an aperture S, a second lens group G2, the prism P, the protective glass CG, and the DMD are disposed in sequence along an optical axis from a higher-magnification side to a lower-magnification side. During projection process, light enters the projection lens from the DMD image plane side through the protective glass CG and prism P, and finally exits from the projection lens and reaches a screen SCN to obtain a projection imaging effect. Exemplarily, the projection lens can be applied to an in-vehicle projection system or an in-vehicle projection device.

Referring to Fig. 1, Fig. 1 is a schematic diagram of a projection lens according to some embodiments in a first aspect of the present application.

As shown in Fig. 1, some embodiments in the first aspect of the present application provide a projection lens. The projection lens includes a first lens group G1 having a negative optical power, an aperture S, and a second lens group G2 having a positive optical power disposed in sequence along an optical axis from a higher-magnification side to a lower-magnification side. The first lens group G1 includes a first lens L1, a second lens L2, a third lens L3, a fourth lens L4, and a fifth lens L5 that are disposed in sequence along the optical axis from the higher-magnification side to the lower-magnification side. The first lens L1 has a negative optical power, the second lens L2 has a positive optical power, the third lens L3 has a negative optical power, the fourth lens L4 has a negative optical power, and the fifth lens L5 has a positive optical power. The second lens group G2 includes a sixth lens L6, a seventh lens L7, an eighth lens L8, a ninth lens L9, and a tenth lens L10 that are disposed in sequence along the optical axis from the higher-magnification side to the lower-magnification side. The sixth lens L6 has a positive optical power, the seventh lens L7 has a negative optical power, the eighth lens L8 has a positive optical power, the ninth lens L9 has a positive optical power, and the tenth lens L10 has a positive optical power. A focal length EFL of the projection lens, a back focal length BFL of the projection lens, and a total track length TTL of the projection lens satisfy at least one of the following conditions: $1.6 \leq BFL/EFL \leq 2.5$, or $BFL/TTL \geq 0.3$.

In the embodiments of the present application, the higher-magnification side refers to a side close to the screen SCN when the projection lens is applied to a projection system or a projection device, and the lower-magnification side refers to a side of the projection lens close to the DMD.

In the embodiments of the present application, the back focal length of the projection lens can also be referred to as a rear focal distance, and the focal length of the projection lens can also be referred to as an effective focal length. Optionally, the total track length TTL of the projection lens is an on-axis distance along the optical axis between a higher-magnification side surface of the first lens L1 and the DMD. The back focal length of the projection lens refers to a distance along the optical axis between a lower-magnification side surface of a lens closest to the DMD and the DMD chip. Optionally, the back focal length of the projection lens is equal to a distance along the optical axis between a lower-magnification side surface of the tenth lens L10 and the DMD.

Optionally, the projection lens satisfies the following conditions: $1.6 \leq$ BFL/EFL $\leq 2.5$, and BFL/TTL $\geq 0.3$.

Exemplarily, the ratio, BFL/EFL, can be 2.5, 2.45, 2.4, 2.3, 2.2, 2.1, 2, 1.9, 1.8, 1.7, or 1.6. The ratio, BFL/EFL, can also be in any combination range of the above values. The ratio, BFL/TTL, can be 0.3, 0.32, 0.35, 0.4, 0.45, 0.48, or 0.5. The ratio, BFL/TTL, can also be any combination range of the above values.

Optionally, the aperture S is a variable aperture, and a size of the aperture can be continuously adjusted. By adjusting the size of the aperture S, the brightness of the projection lens can be changed to be applied in different scenarios. For example, when high brightness is required, the size of the aperture S can be adjusted to the maximum; and when it is used in a dark environment, the size of the aperture S can be reduced.

In the embodiments of the present application, the first lens group G1, the aperture S, and the second lens group G2 are disposed in sequence along the optical axis from the higher-magnification side to the lower-magnification side, and during projection process, the light coming from a light source transmits from an image plane side and then transmits the second lens group G2, the aperture S, and the first lens group G1 in sequence, and is finally projected onto the screen SCN. The projection lens includes at least ten lenses, and by reasonably setting the positive optical power or negative optical power of each lens in the first lens group G1 and the second lens group G2, the projection lens can have a precise structure to achieve the purposes of low cost, compact, and small size.

In the projection lens of the embodiments of the present application, the projection lens includes the first lens group G1, the aperture S, and the second lens group G2, and the aperture S can be used to collect front and rear light rays, which facilitates reducing a total length of the projection lens.

The first lens group G1 plays a role of collecting light rays and correcting distortion and other off-axis aberrations. The second lens group G2 plays a role of controlling an image-side telecentric angle and correcting chromatic aberration and other off-axis aberrations. The first lens group G1 plays a role of distortion correction and contributes to improving a field of view of the system. The first lens group G1 may effectively correct off-axis aberrations such as distortion, coma, field curvature, and astigmatism, and ensure that an incident angle of light incident on the lens surface is relatively gentle to obtain a large field of view without introducing significant higher-order aberrations. By reasonably setting the optical power of each lens, it may ensure the smooth transition of light and the stability of imaging.

By defining the ratio of BFL to EFL of the projection lens to be within [1.6, 2.5], the projection lens may have a relatively large back focal length, which may provide favorable conditions for brightness, structure, and heat dissipation, and improve the performance of the projection lens. By defining the ratio of BFL to TTL of the projection lens to be greater than or equal to 0.3, the projection lens may have a relatively large back focal length, and moreover, the characteristic of small lens length may be satisfied. Thus, the projection device using the projection lens may be miniaturized, thereby improving the performance of the projection lens. In a word, the performance of the projection lens is improved in the embodiments of the present application.

In the projection lens of the embodiments of the present application, the performance of a modulation transfer function (MTF) may be improved by setting the parameter of each lens, such that the lens may have desired imaging quality and distortion of the system may be reduced.

In a condition that a radius of curvature of a higher-magnification side surface of a lens is positive, the higher-magnification side surface of the lens is defines as a convex surface; in a condition that the radius of curvature of the higher-magnification side surface of the lens is negative, the higher-magnification side surface of the lens is defines as a concave surface. In a condition that a radius of curvature of a lower-magnification side surface of a lens is negative, the lower-magnification side surface of the lens is defined as a convex surface; in a condition that the radius of curvature of the lower-magnification side surface of the lens is positive, the lower-magnification side surface of the lens is defined as a concave surface. In a condition that a radius of curvature of the higher-magnification side surface of the lens is $\pm \infty$, the higher-magnification side surface of the lens is defined as a planar. In a condition that the radius of curvature of the lower-magnification side surface of the lens is $\pm \infty$, the lower-magnification side surface of the lens is defined as a planar.

In some embodiments, the first lens group G1 includes an eleventh lens L11 disposed between the second lens L2 and the third lens L3 and having a negative optical power. By reasonably setting a curvature and thickness of the eleventh lens L11, the off-axis aberration and system distortion may be effectively corrected, and the MTF performance may be improved. Optionally, the eleventh lens L11 can be a meniscus negative lens, and has a higher-magnification side surface and a lower-magnification side surface that are respectively a convex surface and a concave surface.

In some embodiments, the second lens group G2 includes a twelfth lens L12 disposed between the aperture S and the eighth lens L8 and having a negative optical power. By reasonably setting a curvature and thickness of the twelfth lens L12, the off-axis aberration and system distortion may be effectively corrected, and the MTF performance may be improved. Optionally, the twelfth lens L12 can be a meniscus negative lens and has a higher-magnification side surface of the twelfth lens L12 and a lower-magnification side surface that are respectively a convex surface and a concave surface.

In some embodiments, the fourth lens L4 and the fifth lens L5 form a doublet lens group having a positive optical power.

In some embodiments, the sixth lens L6, the seventh lens L7, and the eighth lens L8 form a triplet lens group having a positive optical power.

A doublet lens group refers to a lens group formed by bonding two lenses together, and a triplet lens group refers to a lens group formed by bonding three lenses together, with the bonded surfaces of adjacent lenses adhered to each other.

In these embodiments, two lenses (that is, the fourth lens L4 and the fifth lens L5) are bonded together, and three lenses (that is, the sixth lens L6, the seventh lens L7, and the eighth lens L8) are bonded together to form a bonded lens group, which facilitates correction of chromatic aberration and reduction of the air spacing between the lenses, thereby compressing a total track length of the overall system.

In addition, in the embodiments of the present application, only one doublet lens group and only one triplet lens group can be provided, thereby reducing the cost of the projection lens.

In some embodiments, a refractive index of the fourth lens L4 is smaller than a refractive index of the fifth lens L5. A refractive index difference between the fourth lens L4 and the fifth lens L5 can be greater than or equal to 0.2.

In some embodiments, a refractive index of the sixth lens L6 and a refractive index of the eighth lens L8 each are smaller than a refractive index of the seventh lens L7. A refractive index difference between the seventh lens L7 and the sixth lens L6 or a refractive index difference between the seventh lens L7 and the eighth lens L8 can each be greater than or equal to 0.2.

In these embodiments, in the bonded lens group, the collocation and combination of the optical power and the refractive index of multiple lenses may effectively correct the system chromatic aberration, and the positive and negative spherical aberrations of the bonded surfaces are canceled, so that an overall spherical aberration of the projection lens may be corrected. In this way, not only an imaging quality of the projection lens may be ensured, but also the projection lens may have a simple structure.

Optionally, the fourth lens L4 and the fifth lens L5 form a low refractive index and high refractive index combination, and the sixth lens L6, the seventh lens L7, and the eighth lens L8 form a low refractive index-high refractive index-low refractive index combination. A lens having a high refractive index refers to a lens having a refractive index not smaller than 1.70, and a lens having a low refractive index refers to a lens having a refractive index of not greater than 1.60.

In some embodiments, the fourth lens L4 is a biconcave negative lens, and the fifth lens L5 is a biconvex positive lens. A higher-magnification side surface of the fourth lens L4 is a concave surface, and a lower-magnification side surface of the fourth lens L4 is a concave surface. A higher-magnification side surface of the fifth lens L5 is a convex surface, and a lower-magnification side surface of the fifth lens L5 is a convex surface.

In some embodiments, the sixth lens L6 is a biconvex positive lens, the seventh lens L7 is a biconcave negative lens, and the eighth lens L8 is a biconvex positive lens. A higher-magnification side surface of the sixth lens L6 is a convex surface, and a lower-magnification side surface of the sixth lens L6 is a convex surface. A higher-magnification side surface of the seventh lens L7 is a concave surface, and a lower-magnification side surface of the seventh lens L7 is a concave surface. A higher-magnification side surface of the eighth lens L8 is a convex surface, and a lower-magnification side surface of the eighth lens L8 is a convex surface.

In these embodiments, by reasonably setting the concave or convex shape of each lens surface, the optical lens may have smaller aberration, better light utilization rate, and higher resolution.

In some embodiments, an image plane height H of the projection lens, an F-number Fno of the projection lens, and an outer diameter $L_{MAX}$ of a largest lens of the projection lens satisfy at least one of the following conditions: $8 \leq TTL/H \leq 22$, or $10 \text{ mm} \leq L_{MAX}/Fno \leq 25 \text{ mm}$.

Fno is a parameter indicating a light transmission ability of the lens, and Fno = focal length EFL/aperture diameter of the projection lens. Under a condition that the focal length of the lens assembly remains unchanged, the larger the aperture diameter, the smaller a value of Fno, the stronger the light transmission ability of the lens assembly, and the higher the brightness. The outer diameter of the lens can be understood as a length of an outer diameter of a circular object, that is, a longest linear distance from one edge of the lens to the other edge. It can also be understood as a diameter of the lens. In a condition that Fno is within a certain range, the outer diameter of the largest lens is also limited accordingly, so that the small-size design of the projection lens may be achieved to reduce space occupation.

Optionally, the projection lens satisfies the following conditions: $8 \leq TTL/H \leq 22$, and $10 \text{ mm} \leq L_{MAX}/Fno \leq 25 \text{ mm}$. The projection lens has a strong light transmission ability, and the characteristic of small lens length may be satisfied, so that the projection device using the projection lens may be miniaturized.

Exemplarily, the ratio, $L_{MAX}/Fno$, can be 25 mm, 24 mm, 22 mm, 20 mm, 18 mm, 16 mm, 14 mm, 12 mm, or 10 mm. The ratio, $L_{MAX}/Fno$, can be in any combination range of the above values. Optionally, the lens having a largest size in the projection lens can be the first lens L1.

In some embodiments, a focal length $EFL_{ZOOM1}$ of the first lens group G1 and a focal length $EFL_{ZOOM2}$ of the second lens group G2 satisfy: $-65.0 < EFL_{ZOOM1}/EFL < -30.0$, and $0.5 < EFL_{ZOOM2}/EFL < 2.5$.

Exemplarily, the ratio, $EFL_{ZOOM1}/EFL$, can be -64, -60, -58, -55, -50, -45, -40, -35, or -32. The ratio, $EFL_{ZOOM1}/EFL$, can be in any combination range of the above values.

Exemplarily, the ratio, $EFL_{ZOOM2}/EFL$, can be 2.48, 2.4, 2.3, 2.0, 1.8, 1.6, 1.5, 1.2, 1.0, 0.8, 0.7, or 0.6. The ratio, $EFL_{ZOOM2}/EFL$, can also be in any combination range of the above values.

In some embodiments, an F-number Fno of the projection lens satisfies the following condition: Fno ≤ 2.8. Fno is a parameter indicating a light transmission ability of the lens, and Fno = focal length EFL/aperture diameter of the projection lens. Under a condition that the focal length of the lens assembly remains unchanged, the larger the aperture diameter, the smaller the Fno value, the stronger the light transmission ability of the lens assembly, and the higher the brightness. The projection lens of this embodiment may increase a relative size of the aperture S, achieve a large size aperture, increase the light transmission amount, and improve the brightness.

Exemplarily, Fno of the projection lens can be 1.5, 1.6, 1.8, 2.2, 2.4, 2.6, or 2.8. Of course, Fno of the projection lens can be in any combination range of the above values.

In some embodiments, the projection lens satisfies the following condition: 8 mm ≤ EFL ≤ 25 mm.

Exemplarily, the focal length EFL of the projection lens can be 8 mm, 9 mm, 10 mm, 12 mm, 13 mm, 15 mm, 16 mm, 18 mm, 19 mm, 21 mm, 23 mm, or 25 mm. EFL of the projection lens can be in any combination range of the above values.

In some embodiments, the projection lens satisfies the following condition: TTL ≤ 180 mm.

Exemplarily, TTL of the projection lens can be 180 mm, 179 mm, 178 mm, 177 mm, 176 mm, 175 mm, 174 mm, 173 mm, 172 mm, 171 mm, or 170 mm. Of course, TTL of the projection lens can be in any combination range of the above values.

In some embodiments, the projection lens satisfies the following condition: BFL ≥ 20 mm. BFL can be a distance from the tenth lens L10 to the DMD in the projection lens. A space between the tenth lens L10 and the DMD can be used for placing the prism P, the protective glass CG, and the like.

Exemplarily, BFL of the projection lens can be 20 mm, 25 mm, 30 mm, 35 mm, 40 mm, 45 mm, 50 mm, 55 mm, 60 mm, 65 mm, or 70 mm. Of course, BFL of the projection lens can be in any combination range of the above values.

In some embodiments, a diameter of each of the lenses is not greater than 50 mm, which may facilitate the miniaturization of the projection lens. Exemplarily, the diameter of each of the lenses can be 50 mm, 48 mm, 45 mm, 40 mm, 38 mm, 36 mm, 35 mm, 34.6 mm, 34.4 mm, 34.2 mm, or 34.0 mm. Of course, the diameter of each of the lenses can also be in any combination range of the above values.

In some embodiments, all of the lenses of the projection lens are all-glass spherical lenses. An all-glass spherical lens refers to a lens, the whole of which is made of glass material, and of which a front surface and a rear surface are both spherical, or one surface is spherical and the other surface is planar. A spherical lens has a same radius of curvature in all directions, and thus has a same optical power in all directions.

In these embodiments, all of the lenses of the projection lens are all-glass spherical lenses, and includes neither a plastic aspherical lens nor a glass molded aspherical lens, which greatly reduces the cost and the manufacturing difficulty of the whole lens assembly.

In some embodiments, at least two of the lenses of the second lens group G2 each have a refractive index greater than 1.8. Such configuration may correct the distortion and astigmatism of the lens, and at the same time, may also correct the sinusoidal difference of the lens to a certain extent to further improve the imaging quality. Exemplarily, 2, 3, 4, 5, or 6 of the lenses of the second lens group G2 each have the refractive index greater than 1.8.

In some embodiments, X of the lenses of the second lens group G2 each have a ratio of temperature coefficient of refractive index Dn/Dt to focal length EFFL-n is negative, that is, (Dn/Dt)/EFFL-n < 0, where Dn/Dt denotes a temperature coefficient of refractive index of a lens, and EFFL-n denotes a focal length of the lens. X satisfies: 1 ≤ X ≤ 4. A lens having a positive optical power and a negative temperature coefficient of refractive index Dn/Dt may compensate for the thermal defocus of the entire projection lens. A lens having a negative optical power and a positive temperature coefficient of refractive index Dn/Dt may also compensate for the thermal defocus of the entire projection lens.

Optionally, X can be 1, 2, 3, or 4. Exemplarily, a ratio of temperature coefficient of refractive index to focal length of the sixth lens L6 can be negative, a ratio of temperature coefficient of refractive index to focal length of the eighth lens L8 can be negative, and a ratio of temperature coefficient of refractive index to focal length of the tenth lens L10 can be negative.

In these embodiments, the projection lens satisfying the above conditions may effectively compensate for the thermal defocus, such that an image quality is not significantly affected by the projection lens within a certain temperature change range.

The projection lens provided in the present application has a precise structure, and may achieve the design requirements of low cost, compact, and small size. A volume of the lens assembly is small, and the total length and lens diameter are strictly limited to reduce space occupation thereof. The compact structure design may achieve the miniaturization of the projection lens. The projection lens not only has high resolution quality, but also has the characteristics of compact structure and controllable cost. When applied to vehicles, the projection lens may provide greater design freedom for other structures and avoid interference problems such as interior decorative parts. The present application is based on the principle of optical imaging, and repeated optical optimization design is performed on the radius of curvature, material, and thickness of each lens of the projection lens, air spacing, and two bonded lenses by an optical design software, so as to achieve the objectives of small aberration, high resolution, long back focus, small total length, simple structure, high mass productivity, and convenient mass production.

In a second aspect, the present application provides a projection system which includes the projection lens according to any one of the embodiments in the first aspect. Since the projection system of the present application includes the projection lens according to any one of the embodiments in the first aspect, the projection system of the present application also has the above advantages of the projection lens of the present application.

In a third aspect, the present application provides a projection device which includes a projection lens according to any one of the embodiments in the first aspect or the projection system in the second aspect. Since the projection device of the present application includes the projection lens according to any one of the embodiments in the first aspect or the projection system in the second aspect, the projection device of the present application also has the above advantages of the projection lens of the present application.

The technical solutions of the present application will be further described below with reference to specific embodiments.

**Embodiment 1**

Referring to Fig. 1, a projection lens in Embodiment 1 includes a first lens L1, a second lens L2, an eleventh lens L11, a third lens L3, a fourth lens L4, a fifth lens L5, an aperture S, a twelfth lens L12, a sixth lens L6, a seventh lens L7, an eighth lens L8, a ninth lens L9, a tenth lens L10, a prism P, and a protective glass CG that are disposed in sequence from a higher-magnification side to a lower-magnification side.

The first lens L1 is a meniscus negative lens having a convex surface facing the higher-magnification side. The second lens L2 is a meniscus positive lens having a convex surface facing the higher-magnification side. The eleventh lens L11 is a meniscus negative lens having a convex surface facing the higher-magnification side. The third lens L3 is a meniscus negative lens having a convex surface facing the higher-magnification side. The fourth lens L4 is a biconcave negative lens. The fifth lens L5 is a biconvex positive lens. The twelfth lens L12 is a meniscus negative lens having a convex surface facing the higher-magnification side. The sixth lens L6 is a biconvex positive lens. The seventh lens L7 is a biconcave negative lens. The eighth lens L8 is a biconvex positive lens. The ninth lens L9 is a plano-convex positive lens, a higher-magnification side surface of the ninth lens L9 is planar, and a lower-magnification side surface of the ninth lens L9 is a convex surface. The tenth lens L10 is a biconvex positive lens. The optical power of the whole lens assembly is positive.

The relevant parameters of each component are shown in Table 1.

**Table 1**

|  | Surface | Radius of curvature (mm) | Thickness/distance along optical axis (mm) | Refractive index n |
|---|---|---|---|---|
| First lens L1 | 1 | 33.0 | 1.5 | 1.9 |
|  | 2 | 19.2 | 2.5 |  |
| Second lens L2 | 3 | 22.2 | 4.8 | 1.9 |
|  | 4 | 210.0 | 0.2 |  |
| Eleventh lens L11 | 5 | 24.5 | 1.5 | 1.5 |
|  | 6 | 10.2 | 3.6 |  |
| Third lens L3 | 7 | 24.9 | 1.5 | 1.5 |
|  | 8 | 9.9 | 5.0 |  |
| Fourth lens L4 | 9 | -20.0 | 6.0 | 1.5 |
| Fifth lens L5 | 10 | 16.4 | 4.2 | 1.9 |
|  | 11 | -50.4 | 2.8 |  |
| Aperture S | 12 | ∞ | 1.3 |  |
| Twelfth lens L12 | 13 | 33.7 | 6.0 | 1.6 |
|  | 14 | 20.2 | 1.8 |  |

(continued)

|  | Surface | Radius of curvature (mm) | Thickness/distance along optical axis (mm) | Refractive index n |
|---|---|---|---|---|
| Sixth lens L6 | 15 | 97.4 | 4.8 | 1.6 |
| Seventh lens L7 | 16 | -9.6 | 2.1 | 1.8 |
| Eighth lens L8 | 17 | 42.7 | 4.6 | 1.5 |
|  | 18 | -20.9 | 0.2 |  |
| Ninth lens L9 | 19 | ∞ | 3.0 | 1.8 |
|  | 20 | -37.5 | 0.2 |  |
| Tenth lens L10 | 21 | 27.9 | 5.5 | 1.5 |
|  | 22 | -47.6 | 8.7 |  |
| Prism P | 23 | ∞ | 16 | 1.7 |
|  | 24 | ∞ | 0.8 |  |
| Protective glass CG | 25 | ∞ | 1.1 | 1.5 |
|  | 26 | ∞ | 0.3 |  |

The surfaces 1 to 26 are arranged in sequence from the higher-magnification side to the lower-magnification side.

Embodiment 1 provides a long back focus projection lens having a BFL of 26.9 mm, BFL/EFL of 1.92, and BFL/TTL of 0.3. This lens has a precise structure, and achieves a compact imaging lens with a low cost and a small volume. The present application based on the principle of optical imaging, and repeated optical optimization design is performed on the radius of curvature, material, and thickness of each lens of the projection lens, air spacing, and two bonded lenses by an optical design software, so as to achieve the objectives of small aberration, high resolution, long back focus, small total length, simple structure, high mass productivity, and convenient mass production.

**Embodiment 2**

Referring to Fig. 2, a projection lens in Embodiment 2 includes a first lens L1, a second lens L2, an eleventh lens L11, a third lens L3, a fourth lens L4, a fifth lens L5, an aperture S, a twelfth lens L12, a sixth lens L6, a seventh lens L7, an eighth lens L8, a ninth lens L9, a tenth lens L10, a prism P, and a protective glass CG that are disposed in sequence from a higher-magnification side to a lower-magnification side.

Embodiment 2 differs from Embodiment 1 in that: the second lens L2 is a plano-convex positive lens, a higher-magnification side surface of the second lens L2 is a convex surface, and a lower-magnification side surface of the second lens L2 is planar; and the ninth lens L9 is a biconvex positive lens. In addition, the specific parameters of the projection lens in Embodiment 2 are different from those of the projection lens in Embodiment 1.

The relevant parameters of each component are shown in Table 2.

**Table 2**

|  | Surface | Radius of curvature (mm) | Thickness/distance along optical axis (mm) | Refractive index n |
|---|---|---|---|---|
| First lens L1 | 1 | 33.9 | 1.5 | 1.9 |
|  | 2 | 19.5 | 2.2 |  |
| Second lens L2 | 3 | 24.4 | 4.8 | 1.9 |
|  | 4 | ∞ | 0.2 |  |
| Eleventh lens L11 | 5 | 44.3 | 1.5 | 1.5 |
|  | 6 | 10.5 | 3.3 |  |
| Third lens L3 | 7 | 21.0 | 1.5 | 1.5 |
|  | 8 | 12.1 | 4.4 |  |

(continued)

|  | Surface | Radius of curvature (mm) | Thickness/distance along optical axis (mm) | Refractive index n |
|---|---|---|---|---|
| Fourth lens L4 | 9 | -19.2 | 6.0 | 1.5 |
| Fifth lens L5 | 10 | 23.3 | 3.2 | 1.9 |
|  | 11 | -38.7 | 5.3 |  |
| Aperture S | 12 | ∞ | 6.4 |  |
| Twelfth lens L12 | 13 | 289.0 | 1.5 | 1.7 |
|  | 14 | 42.3 | 1.4 |  |
| Sixth lens L6 | 15 | 139.0 | 4.5 | 1.6 |
| Seventh lens L7 | 16 | -11.9 | 1.5 | 1.8 |
| Eighth lens L8 | 17 | 57.3 | 4.4 | 1.5 |
|  | 18 | -22.8 | 0.2 |  |
| Ninth lens L9 | 19 | 126.7 | 3.2 | 1.9 |
|  | 20 | -44.1 | 0.2 |  |
| Tenth lens L10 | 21 | 29.9 | 5.8 | 1.5 |
|  | 22 | -152.4 | 8.7 |  |
| Prism P | 23 | ∞ | 16 | 1.7 |
|  | 24 | ∞ | 0.8 |  |
| Protective glass CG | 25 | ∞ | 1.1 | 1.5 |
|  | 26 | ∞ | 0.3 |  |

The surfaces 1 to 26 are arranged in sequence from the higher-magnification side to the lower-magnification side.

Embodiment 2 provides a long back focus projection lens having BFL of 26.9 mm, BFL/EFL of 1.95, and BFL/TTL of 0.3. This lens has a precise structure, and achieves a compact imaging lens with a low cost and a small volume. The present application is based on the principle of optical imaging, and repeated optical optimization design is performed on the radius of curvature, material, and thickness of each lens of the projection lens, air spacing, and two bonded lenses by an optical design software, so as to achieve the objectives of small aberration, high resolution, long back focus, small total length, simple structure, high mass productivity, and convenient mass production.

**Embodiment 3**

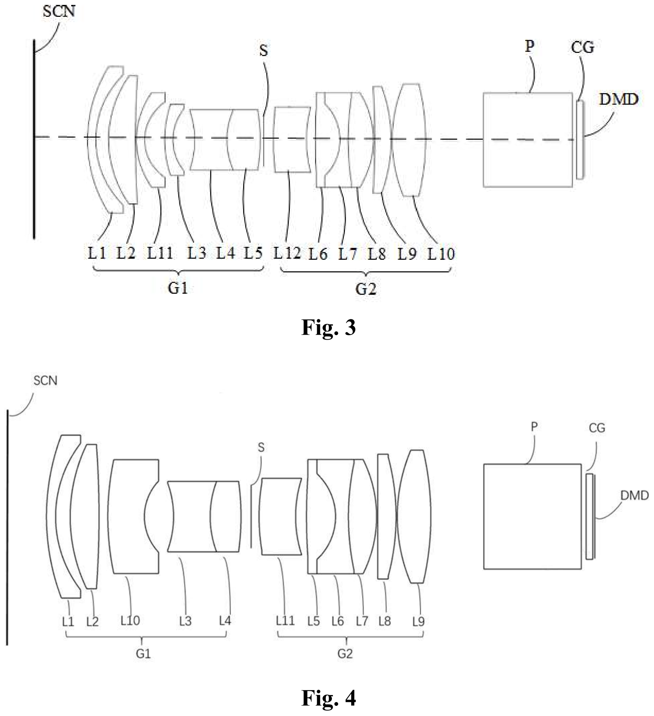

Referring to Fig. 3, a projection lens in Embodiment 3 includes a first lens L1, a second lens L2, an eleventh lens L11, a third lens L3, a fourth lens L4, a fifth lens L5, an aperture S, a twelfth lens L12, a sixth lens L6, a seventh lens L7, an eighth lens L8, a ninth lens L9, a tenth lens L10, a prism P, and a protective glass CG that are disposed in sequence from a higher-magnification side to a lower-magnification side.

Embodiment 3 differs from Embodiment 1 in that: the ninth lens L9 is a meniscus positive lens having a convex surface facing the lower-magnification side, and the specific parameters of the projection lens in Embodiment 3 are different from those of the projection lens in Embodiment 1.

The relevant parameters of each component are shown in Table 3.

**Table 3**

|  | Surface | Radius of curvature (mm) | Thickness/distance along optical axis (mm) | Refractive index n |
|---|---|---|---|---|
| First lens L1 | 1 | 27.0 | 1.5 | 1.9 |
|  | 2 | 18.0 | 2.3 |  |
| Second lens L2 | 3 | 21.8 | 4.8 | 1.8 |

(continued)

| | Surface | Radius of curvature (mm) | Thickness/distance along optical axis (mm) | Refractive index n |
|---|---|---|---|---|
| | 4 | 189.4 | 0.2 | |
| Eleventh lens L11 | 5 | 15.9 | 1.5 | 1.7 |
| | 6 | 8.9 | 3.6 | |
| Third lens L3 | 7 | 21.9 | 1.5 | 1.5 |
| | 8 | 9.6 | 4.0 | |
| Fourth lens L4 | 9 | -18.0 | 5.8 | 1.5 |
| Fifth lens L5 | 10 | 14.6 | 6.0 | 1.8 |
| | 11 | -33.9 | 0.6 | |
| Aperture S | 12 | ∞ | 1.8 | |
| Twelfth lens L12 | 13 | 52.9 | 6.0 | 1.6 |
| | 14 | 25.2 | 1.6 | |
| Sixth lens L6 | 15 | 150.0 | 4.4 | 1.6 |
| Seventh lens L7 | 16 | -10.1 | 1.5 | 1.8 |
| Eighth lens L8 | 17 | 56.7 | 4.6 | 1.5 |
| | 18 | -17.7 | 0.2 | |
| Ninth lens L9 | 19 | -184.1 | 3.0 | 1.8 |
| | 20 | -30.4 | 0.2 | |
| Tenth lens L10 | 21 | 28.9 | 6.0 | 1.5 |
| | 22 | -46.2 | 10.5 | |
| Prism P | 23 | ∞ | 16 | 1.7 |
| | 24 | ∞ | 0.8 | |
| Protective glass CG | 25 | ∞ | 1.1 | 1.5 |
| | 26 | ∞ | 0.3 | |

The surfaces 1 to 26 are arranged in sequence from the higher-magnification side to the lower-magnification side.

Embodiment 3 provides a long back focus projection lens having BFL of 28.7 mm, BFL/EFL of 2.11, and BFL/TTL of 0.32. This lens has a precise structure, and achieves a compact imaging lens with a low cost and a small volume. The present application is based on the principle of optical imaging, and repeated optical optimization design is performed on the radius of curvature, material, and thickness of each lens of the projection lens, air spacing, and two bonded lenses by an optical design software, so as to achieve the objectives of small aberration, high resolution, long back focus, small total length, simple structure, high mass productivity, and convenient mass production.

**Embodiment 4**

Referring to Fig. 4, a projection lens in Embodiment 4 includes a first lens L1, a second lens L2, a tenth lens L10, a third lens L3, a fourth lens L4, an aperture S, an eleventh lens L11, a fifth lens L5, a sixth lens L6, a seventh lens L7, an eighth lens L8, a ninth lens L9, a prism P, and a protective glass CG that are disposed in sequence from a higher-magnification side to a lower-magnification side. The first lens L1, the second lens L2, the tenth lens L10, the third lens L3, the fourth lens L4, the eleventh lens L11, the fifth lens L5, the sixth lens L6, the seventh lens L7, the eighth lens L8, and the ninth lens L9 have a negative optical power, a positive optical power, a negative optical power, a negative optical power, a positive optical power, a negative optical power, a positive optical power, a negative optical power, a positive optical power, a positive optical power, and a positive optical power, respectively. A higher-magnification side surface of the first lens L1 is a convex surface, and a lower-magnification side surface of the first lens L1 is a concave surface. The second lens L2 is a biconvex lens. A higher-magnification side surface of the tenth lens L10 is a convex surface, and a lower-magnification side surface of the tenth lens L10 is a concave surface. The third lens L3 is a biconvex lens. The fourth lens L4 is a biconvex lens. A higher-magnification side surface of each of the aperture S and the eleventh lens L10 is a convex surface, and a lower-magnification side surface of each of the aperture S and the eleventh lens L10 is a concave surface. The fifth lens L5 is a biconvex lens. The sixth lens L6 is a biconcave lens. The seventh lens L7 is a biconvex lens. A higher-magnification side surface of the second lens L2 is planer, and a lower-magnification side surface of the second lens L2 is a convex surface. The ninth lens L9 is a biconvex lens.

Embodiment 4 differs from Embodiment 1 in that: the number of the lenses in the first lens group G1 is reduced by one, and the specific parameters of the projection lens in Embodiment 4 are different from those of the projection lens in Embodiment 1, such as, the refractive index.

The relevant parameters of each component are shown in Table 4.

**Table 4**

|  | Surface | Radius of curvature (mm) | Thickness/distance along optical axis (mm) | Refractive index n |
|---|---|---|---|---|
| First lens L1 | 1 | 37.6 | 1.5 | 1.8 |
|  | 2 | 19.6 | 2.4 |  |
| Second lens L2 | 3 | 27.2 | 4.7 | 1.8 |
|  | 4 | -163.0 | 1.4 |  |
| Tenth lens L10 | 5 | 44.9 | 6.0 | 1.6 |
|  | 6 | 8.5 | 4.8 |  |
| Third lens L3 | 7 | -16.0 | 6.0 | 1.5 |
| Fourth lens L4 | 8 | 16.3 | 5.1 | 1.9 |
|  | 9 | -41.9 | 1.7 |  |
| Aperture S | 10 | ∞ | 1.3 |  |
| Eleventh lens L11 | 11 | 33.7 | 6.0 | 1.6 |
|  | 12 | 20.2 | 1.8 |  |
| Fifth lens L5 | 13 | 97.4 | 4.8 | 1.6 |
| Sixth lens L6 | 14 | -9.6 | 2.1 | 1.8 |
| Seventh lens L7 | 15 | 42.7 | 4.6 | 1.5 |
|  | 16 | -20.9 | 0.2 |  |
| Eighth lens L8 | 17 | ∞ | 3.0 | 1.8 |
|  | 18 | -37.5 | 0.2 |  |
| Ninth lens L9 | 19 | 27.9 | 5.5 | 1.5 |
|  | 20 | -47.6 | 8.7 |  |
| Prism P | 21 | ∞ | 16 | 1.7 |
|  | 22 | ∞ | 0.8 |  |
| Protective glass CG | 23 | ∞ | 1.1 | 1.5 |
|  | 24 | ∞ | 0.3 |  |

The surfaces 1 to 24 are arranged in sequence from the higher-magnification side to the lower-magnification side.

Embodiment 4 provides a long back focus projection lens having BFL of 26.9 mm, BFL/EFL of 1.85, and BFL/TTL of 0.3. This lens has a precise structure, and achieves a compact imaging lens with a low cost and a small volume. The present application is based on the principle of optical imaging, and repeated optical optimization design is performed on the radius of curvature, material, and thickness of each lens of the projection lens, air spacing, and two bonded lenses by an optical design software, so as to achieve the objectives of small aberration, high resolution, long back focus, small total length, simple structure, high mass productivity, and convenient mass production.

The present application can be carried out in other specific forms without departing from its essential characteristics. For example, the algorithms described in particular embodiments may be modified while the system architecture does not depart from the present application. Accordingly, these embodiments are to be regarded in all respects as exemplary but not limiting, the scope of the present application is defined by the appended claims rather than the above description, and all changes falling within the meaning and scope of equivalents of the claims are thus fall within the scope of the present application.

**Claims**

1. A projection lens, comprising a first lens group (G1) having a negative optical power, an aperture (S), and a second lens group (G2) having a positive optical power that are disposed in sequence along an optical axis from a higher-magnification side to a lower-magnification side, wherein

    the first lens group (G1) comprises a first lens (L1), a second lens (L2), a third lens (L3), a fourth lens (L4), and a fifth lens (L5) that are disposed in sequence along the optical axis from the higher-magnification side to the lower-magnification side, the first lens (L1) having a negative optical power, the second lens (L2) having a positive optical power, the third lens (L3) having a negative optical power, the fourth lens (L4) having a negative optical power, and the fifth lens (L5) having a positive optical power;
    the second lens group (G2) comprises a sixth lens (L6), a seventh lens (L7), an eighth lens (L8), a ninth lens (L9), and a tenth lens (L10) that are disposed in sequence along the optical axis from the higher-magnification side to the lower-magnification side, the sixth lens (L6) having a positive optical power, the seventh lens (L7) having a negative optical power, the eighth lens (L8) having a positive optical power, the ninth lens (L9) having a positive optical power, and the tenth lens (L10) having a positive optical power; and
    a focal length EFL of the projection lens, a back focal length BFL of the projection lens, and a total track length TTL of the projection lens satisfy at least one of following conditions:

$$1.6 \leq \mathrm{BFL/EFL} \leq 2.5,$$

    or

$$\mathrm{BFL/TTL} \geq 0.3.$$

2. The projection lens according to claim 1, wherein

    the first lens group (G1) further comprises an eleventh lens (L11) disposed between the second lens (L2) and the third lens (L3) and having a negative optical power; and/or
    the second lens group (G2) further comprises a twelfth lens (L12) disposed between the aperture (S) and the eighth lens (L8) and having a negative optical power.

3. The projection lens according to claim 1, wherein

    the fourth lens (L4) and the fifth lens (L5) form a doublet lens group having a positive optical power; and/or
    the sixth lens (L6), the seventh lens (L7), and the eighth lens (L8) form a triplet lens group having a positive optical power.

4. The projection lens according to claim 3, wherein

    a refractive index of the fourth lens (L4) is smaller than a refractive index of the fifth lens (L5); and/or
    a refractive index of the sixth lens (L6) and a refractive index of the eighth lens (L6) each are smaller than a refractive index of the seventh lens (L7).

5. The projection lens according to claim 3, wherein

    the fourth lens (L4) is a biconcave negative lens, and the fifth lens (L5) is a biconvex positive lens; and/or

the sixth lens (L6) is a biconvex positive lens, the seventh lens (L7) is a biconcave negative lens, and the eighth lens (L8) is a biconvex positive lens.

6. The projection lens according to claim 1, wherein an image plane height H of the projection lens, an F-number Fno of the projection lens, and an outer diameter $L_{MAX}$ of a largest lens of the projection lens satisfy at least one of following conditions:

$$8 \leq TTL/H \leq 22,$$

or

$$10 \text{ mm} \leq L_{MAX}/Fno \leq 25 \text{ mm}.$$

7. The projection lens according to claim 1, wherein the EFL of the projection lens, a focal length $EFL_{ZOOM1}$ of the first lens group (G1), and a focal length $EFL_{ZOOM2}$ of the second lens group (G2) satisfy following conditions:

$$-65.0 < EFL_{ZOOM1}/EFL < -30.0,$$

and

$$| 0.5 < EFL_{ZOOM2}/EFL < 2.5.$$

8. The projection lens according to any one of claims 1 to 7, wherein the projection lens satisfies at least one of following conditions:

$$8 \text{ mm} \leq EFL \leq 25 \text{ mm};$$

$$TTL \leq 180 \text{ mm};$$

$$BFL \geq 20 \text{ mm};$$

Fno $\leq 2.8$, where Fno denotes an F-number of the projection lens; or
a diameter of each of the lenses being not greater than 50 mm.

9. The projection lens according to any one of claims 1 to 7, wherein all of the lenses of the projection lens are all-glass spherical lenses.

10. The projection lens according to any one of claims 1 to 7, wherein

at least two of the lenses of the second lens group (G2) each have a refractive index greater than 1.8; and/or
X of the lenses the second lens group (G2) each have a ratio of temperature coefficient of refractive index to focal length that is negative, X satisfying: $1 \leq X \leq 4$.

11. A projection system, comprising the projection lens according to any one of claims 1 to 7.

12. A projection system, comprising the projection lens according to claim 8.

13. A projection system, comprising the projection lens according to claim 9.

**14.** A projection system, comprising the projection lens according to claim 10.

**15.** A projection device, comprising the projection lens according to any one of claims 1 to 7 or the projection system according to claim 11.

**Fig. 1**

**Fig. 2**

EP 4 764 645 A1

**Fig. 3**

**Fig. 4**

17

Europäisches
Patentamt
European
Patent Office
Office européen
des brevets

# EUROPEAN SEARCH REPORT

**Application Number**

EP 25 21 6358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2017 058511 A (KONICA MINOLTA INC) 23 March 2017 (2017-03-23) * paragraph [0115]; figure 3; example 3 * | 1-15 | INV. G02B9/64 G02B13/04 G02B15/14 G02B13/16 |
| X | JP 2017 173588 A (KONICA MINOLTA INC) 28 September 2017 (2017-09-28) * figure 3 * | 1-15 | |
| X | JP 2010 128480 A (FUJINON CORP) 10 June 2010 (2010-06-10) * figure 1 * | 1-15 | |
| X | US 2013/314800 A1 (AMANO MASARU [JP]) 28 November 2013 (2013-11-28) * figure 2a * | 1-15 | |
| X | JP 2023 081511 A (SEIKO EPSON CORP) 13 June 2023 (2023-06-13) * figure 2 * | 1-15 | |
| A | CN 115 469 441 A (KONICA MINOLTA INC) 13 December 2022 (2022-12-13) * the whole document * | 1-15 | TECHNICAL FIELDS SEARCHED (IPC)<br><br>G02B |
| A | JP 2013 200454 A (RICOH OPTICAL IND CO) 3 October 2013 (2013-10-03) * the whole document * | 1-15 | |
| A | CN 219 642 072 U (YIBIN JIMI PHOTOELECTRIC CO LTD) 5 September 2023 (2023-09-05) * the whole document * | 1-15 | |

The present search report has been drawn up for all claims

| Place of search | Date of completion of the search | Examiner |
|---|---|---|
| Munich | 2 April 2026 | Daffner, Michael |

EPO FORM 1503 03.82 (P04C01)

## ANNEX TO THE EUROPEAN SEARCH REPORT
## ON EUROPEAN PATENT APPLICATION NO.

EP 25 21 6358

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2026

| Patent document cited in search report | | | Publication date | Patent family member(s) | | Publication date |
|---|---|---|---|---|---|---|
| JP 2017058511 | A | | 23-03-2017 | JP 6485302 B2 | | 20-03-2019 |
| | | | | JP 2017058511 A | | 23-03-2017 |
| | | | | US 2017075094 A1 | | 16-03-2017 |
| JP 2017173588 | A | | 28-09-2017 | JP 6658185 B2 | | 04-03-2020 |
| | | | | JP 2017173588 A | | 28-09-2017 |
| | | | | US 2017276916 A1 | | 28-09-2017 |
| JP 2010128480 | A | | 10-06-2010 | JP 5363084 B2 | | 11-12-2013 |
| | | | | JP 2010128480 A | | 10-06-2010 |
| US 2013314800 | A1 | | 28-11-2013 | JP 5701970 B2 | | 15-04-2015 |
| | | | | JP WO2012114756 A1 | | 07-07-2014 |
| | | | | US 2013314800 A1 | | 28-11-2013 |
| | | | | WO 2012114756 A1 | | 30-08-2012 |
| JP 2023081511 | A | | 13-06-2023 | JP 7694363 B2 | | 18-06-2025 |
| | | | | JP 2023081511 A | | 13-06-2023 |
| | | | | US 2023168476 A1 | | 01-06-2023 |
| CN 115469441 | A | | 13-12-2022 | CN 115469441 A | | 13-12-2022 |
| | | | | JP 7661797 B2 | | 15-04-2025 |
| | | | | JP 2022189472 A | | 22-12-2022 |
| | | | | US 2022397748 A1 | | 15-12-2022 |
| JP 2013200454 | A | | 03-10-2013 | JP 5887175 B2 | | 16-03-2016 |
| | | | | JP 2013200454 A | | 03-10-2013 |
| CN 219642072 | U | | 05-09-2023 | NONE | | |

EPO FORM P0459

For more details about this annex : see Official Journal of the European Patent Office, No. 12/82